# EUROPEAN PATENT SPECIFICATION

(11) **EP 2 746 889 B1**
(45) Date of publication and mention of the grant of the patent: **11.05.2016**
(21) Application number: 12008601.2
(22) Date of filing: 22.12.2012
(51) Int. Cl.: F24D 19/10, G05D 23/01

(54) **A method and an adjusting tool for adjusting a presetting of a valve, in particular a heat exchanger valve**
Verfahren und Einstellwerkzeug zum Einstellen einer Voreinstellung eines Ventils, insbesondere eines Wärmetauscherventils
Procédé et outil de réglage pour régler une prédétermination d'une soupape, en particulier une soupape d'échange de chaleur

(43) Date of publication of application: 25.06.2014
(73) Proprietor: Danfoss A/S, 6430 Nordborg (DK)
(72) Inventor: Christensen, Morten H., 8963 Auning (DK); Bjerggaard, Niels, 8370 Hadsten (DK); Clausen, Anders Ostergaard, 8680 Ry (DK)
(74) Representative: Knoblauch, Andreas

(56) References cited:
- EP-A1- 2 316 521
- EP-A2- 0 900 989
- WO-A2-2009/026921
- DE-A1- 3 521 965

## Description

The present invention relates to a method for adjusting a presetting of a valve, in particular a heat exchanger valve, said method comprising a step of moving in a valve housing a presetting element to a presetting position corresponding to a desired presetting.

Furthermore, the present invention relates to an adjusting tool for adjusting a presetting of a valve, in particular a heat exchanger valve, said adjusting tool having an engaging geometry adapted to engage a presetting element of said heat exchanger valve.

The invention is described in connection with a radiator valve as an example. However, it is not limited to the adjustment of the presetting of a radiator valve.

A radiator valve having presetting means is known from EP 0 900 989 A2.

WO 2009/026921 A2 shows a thermostat for controlling a valve.

When a number of radiators are connected to a heating system, a presetting is needed to balance out the supply of heating liquid to the radiators. Simply spoken, the presetting limits the maximum flow of heating liquid through a radiator when the radiator valve is in its fully open position.

Presetting is performed by moving a presetting element in a position corresponding to the desired presetting. In many cases this movement is a rotational movement. Typically, the valve housing has a scale around or in connection with the stuffing box of the valve and the presetting element or an element connected to the presetting element has a reference mark so that the desired presetting can be performed.

However, often the valves are mounted in places where it is not easy to see the scale, let alone turn to the desired reference mark or the wanted setting.

The object underlying the invention is to facilitate precise adjustment of presetting.

This object is solved in a method as described above in that in a preadjustment step said presetting position is adjusted in an adjusting tool and in an adjustment step said adjusting tool is mounted on said valve housing engaging said presetting element and said valve housing, wherein said adjusting tool is moved relative to said valve housing until it rests against the stop at said valve housing.

In this way it is no longer necessary to have a view to the scale on the housing of the valve. In a first step, the desired presetting is adjusted in the adjusting tool. In a second step, this adjusted presetting is transferred from the adjusting tool to the valve. The presetting can be adjusted on the adjusting tool in a location where the installer has a free view on the adjusting tool and therefore can perform the adjustment with the necessary or desired precision. The transfer of the presetting from the adjusting tool to the valve does not need any visual control. When the adjusting tool is mounted on the valve, it engages the presetting element and the valve housing. When the adjusting tool is moved, it moves the presetting element. However, this movement is stopped at the stop of the valve housing.

Preferably said adjusting tool comprises a first part and a second part, wherein in said preadjustment step said first part and said second part are moved relative to each other in a moving direction and in said adjustment step are fixed relative to each other in said moving direction. The two parts of the adjusting tool can be moved relative to each other in the preadjustment step only. Once the presetting is adjusted on the tool and the adjustment step is performed, the two parts of the adjusting tool are at least in the moving direction connected rigidly. Therefore the adjusting tool can be handled as one part without the risk that the adjusted presetting is changed.

Preferably said adjusting tool is rotated when engaging said presetting element to adjust said presetting. The rotation of the presetting element is a simple movement which is sufficient to adjust the presetting.

In a preferred embodiment said first part and said second part are rotated relative to each other in said preadjustment step. When the adjusting tool is rotated with respect to the valve housing when adjusting the presetting, the movement in the same direction, i.e. in rotational direction, can be used for preadjusting the presetting at the adjusting tool.

Preferably one of said first part and said second part comprises a scale and the other of said first part and said second part comprises a reference mark, said preadjustment step comprising moving said reference mark to a predetermined position of said scale. The positioning of the reference mark to a certain number or a point on the scale is a simple possibility to adjust the adjusting tool to the desired presetting. It is possible to provide the installer with a table having a correspondence between numbers or marks on the scale and presetting values.

The object is solved with an adjusting tool as described above in that said adjusting tool comprises a first part and a second part, in a preadjustment condition said first part and said second part being moveable relative to each other in a moving direction, in an adjustment condition said first part and said second part being fixed relative to each other in said moving direction, said first part having a valve geometry adapted to engage a stationary part of said valve and said second part having said engaging geometry.

Such an adjusting tool can be used for performing the method for adjusting the presetting of a heat exchanger valve. The preadjustment can be performed by moving said first part and said second part of said adjusting tool relative to each other until the desired presetting is reached and to "freeze" this presetting by fixing the two parts of the adjusting tool relative to each other.

Preferably said first part comprises stop means adapted to come to rest against a stop of said stationary part of said valve. The stationary part of said valve can be the valve housing, for example. When the presetting is adjusted in said adjusting tool, the adjusting tool has been prepared accordingly so that the information about the desired adjusting is contained in the adjusting tool. Thereafter, the adjusting tool is mounted to the valve and moved relative to the valve, for example rotated. This movement is continued until the first part rests against the stop at the housing. Since during adjusting a presetting element of the valve is moved together with the tool, the presetting element is in the correct position when the first part comes to rest against the stop.

Preferably said first part and said second part are rotatable around an axis relative to each other in said preadjustment condition. In other words, the two parts are rotated relative to each other in order to adjust the desired presetting in the adjusting tool. However, such a rotational movement is possible in the preadjustment condition only. When the adjusting tool has changed in the adjustment condition no further rotational movement between the first part and the second part is possible.

Preferably said first part and said second part are moveable relative to each other in a direction parallel to said axis when changing between said preadjustment condition and said adjustment condition. When the adjusting tool is rotated relative to the valve when the presetting is adjusted, it is necessary to have a fixed connection between the first part and the second part in rotational direction. However, it is not necessary to have such a fixed connection in an axial direction (related to the rotational axis of the adjusting tool). This effect can be used to facilitate the adjustment of the adjusting tool to the desired presetting. When the adjusting tool is in the adjustment condition and the desired presetting should be changed, the two parts are moved relative to each other in axial direction for a predetermined distance. After such a movement they can be rotated freely relative to each other until the desired presetting is achieved. Thereafter, the two parts are moved relative to each other in axial direction to arrive again at the adjustment condition.

In a preferred embodiment said first part comprises a first set of teeth and said second part comprises a second set of teeth, said first set of teeth and said second set of teeth engaging each other in said adjustment condition and being out of engagement in said preadjustment condition. The use of two sets of teeth is a relative simple way to fix the two parts in rotational direction relative to each other. However, it is simple to allow a free rotation of the two parts when the two sets of teeth have been shifted relative to each other so that they do not longer engage each other.

Preferably one of said first set of teeth and said second set of teeth extends radially outwardly and the other one of said first set of teeth and said second set of teeth extends radially inwardly. In this way it is possible to obtain a sufficient length of engagement between the two sets of teeth so that the adjusting tool can transmit a sufficient torque to the presetting element when the adjusting tool is rotated at the first part and not at the second part.

In a preferred embodiment a spring is arranged between said first part and said second part urging said first part and said second part into said adjustment condition. In order to obtain the preadjustment condition the installer has to apply an external force to the two parts, said external force acting against the force of the spring. As soon as this external force disappears, the two parts are moved by the spring to arrive at the adjustment condition.

Preferably one of said first part and said second part comprises a scale and the other one of said first part and said second part comprises a reference mark, wherein said reference mark can be placed in different positions of said scale. The scale and the reference mark facilitate the adjustment of the presetting. It is possible to provide the installer with a list in which for each point on the scale a presetting value of the valve is defined.

Preferably in said adjustment condition said scale is hidden by the one of said first part and said second part carrying said reference mark. The scale is hidden when the adjusting tool is used to adjust the presetting at the valve. This adjustment sometimes is carried out under "rough" conditions, so the risk that the scale is damaged is reduced.

A preferred example of the invention will now be described in more detail with reference to the drawing, wherein:
- Fig. 1: shows a radiator valve with a presetting element in a first position,
- Fig. 2: shows the radiator valve of fig. 1 with the presetting element in a second position,
- Fig. 3: shows an adjusting tool and the steps for changing the presetting in this adjusting tool and
- Fig. 4: shows the adjusting tool, partly in longitudinal section.

The invention is illustrated in connection with a radiator valve. This radiator valve is an example for a heat exchanger valve. However, the invention is not limited to a radiator valve.

When a number of radiators are connected to a heating system, a presetting is necessary in each radiator valve so that the supply of heating fluid to the radiators can be balanced. Basically, the presetting limits the maximum flow of heating fluid through a radiator valve when the radiator valve is in fully open position.

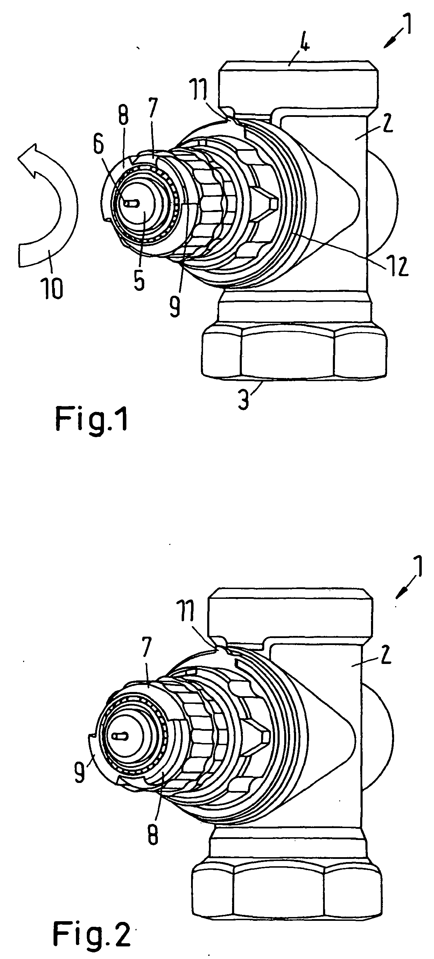

Fig. 1 shows a radiator valve 1 having a housing 2 with two connections 3, 4. The basic construction of such a valve 1 is known per se and therefore not described in further details here. The valve 1 comprises a stuffing box 5, a pin 6 procuring through said stuffing box 5 to the outside. Said pin 6 is used to actuate a valve element in the valve housing 2.

A presetting element 7 is arranged surrounding said stuffing box 5 and the presetting element 7 continues into the inside of the housing 2. However, the presetting element 7 can be formed of a number of parts which are operatively connected to each other.

The presetting element 7 comprises two protrusions 8, 9. These protrusions 8, 9 are asymmetric in rotational direction. In the present case, the protrusions 8, 9 are arranged in one half of the presetting element 7 in circumferential direction only. However, the protrusions 8, 9 can be designed in many different ways. Comparing fig. 1 and 2, it can be seen that in fig. 2 the presetting element 7 has been rotated by 180 ° around the pin 6, as indicated by arrow 10 in fig. 1.

The housing 2 comprises a stop 11 which is fixed relative to the housing 2. Furthermore, the housing 2 comprises a mounting surface 12 running in circumferential direction and having basically the form of a cylinder. The stop 11 can be arranged behind the mounting surface 12. The stop 11 can, for example, also be arranged on a loose ring mounted on the valve top, which is then unrotational, or on the housing 2, for example by direct moulding into the housing or made by processing.

When the valve 1 is mounted in a position in which an installer does not have the possibility to look onto the front face of the stuffing box 5, it would be difficult to adjust the presetting since it is not possible to control the rotational position of the presetting element 7.

In order to overcome the problems caused by such a positioning of the valve 1, an adjusting tool 13 is used for the adjustment of the presetting of the valve 1. The adjusting tool 13 comprises a first part 14 and a second part 15. The first part 14 has a scale 16 on a circumferential surface. The second part 15 carries a reference mark 17. The reference mark 17 is permanently visible. The scale 16 is visible only in certain conditions.

Using such an adjusting tool 13 helps the adjusting of the presetting of the valve 1 in that this adjusting is divided in two steps. One of these steps can be performed away from the valve 1 using the adjusting tool 13 only. The installer is free to manipulate the adjusting tool 13 having full control over the adjusting tool 13. The step of manipulating the adjusting tool 13 is named "preadjusting step".

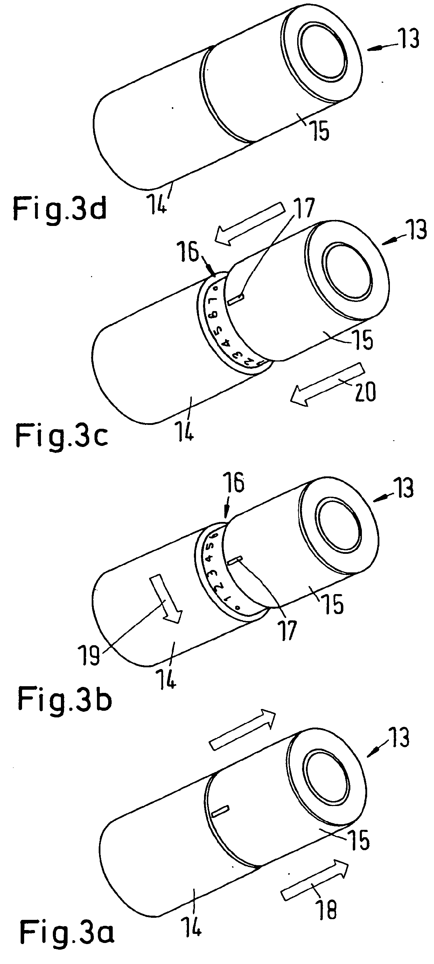

In the preadjusting step the second part 15 is moved relative to the first part 14 in longitudinal direction indicated by arrows 18. The start of the movement is shown in the fig. 3a. In the position of the two parts 14, 15 shown in fig. 3a, there is no rotational movement possible between the two parts 14, 15.

After a movement in axial direction (related to a rotational axis which will be described later) the scale 16 becomes visible as shown in fig. 3b. At the same time, the first part 14 and the second part 15 can be rotated relative to each other about a rotational axis. The rotational axis is the middle axis of the two parts 14, 15. This rotational movement is shown by arrow 19.

In fig. 3b the reference mark 17 points to the digit 3 on the scale 16. After the rotation of the first part 14 relative to the second part 15 in the direction of the arrow 19, the reference mark 17 points to digit 6 on the scale 16. Thereafter, the first part 14 and the second part 15 are moved back in axial direction, as indicated by arrows 20, to arrive at the position in fig. 3d. In this position the two parts 14, 15 are fixed relative to each other in rotational direction, i.e. independently which of the parts 14, 15 is driven, in rotational direction, the other part 15, 14 will rotate concurrently.

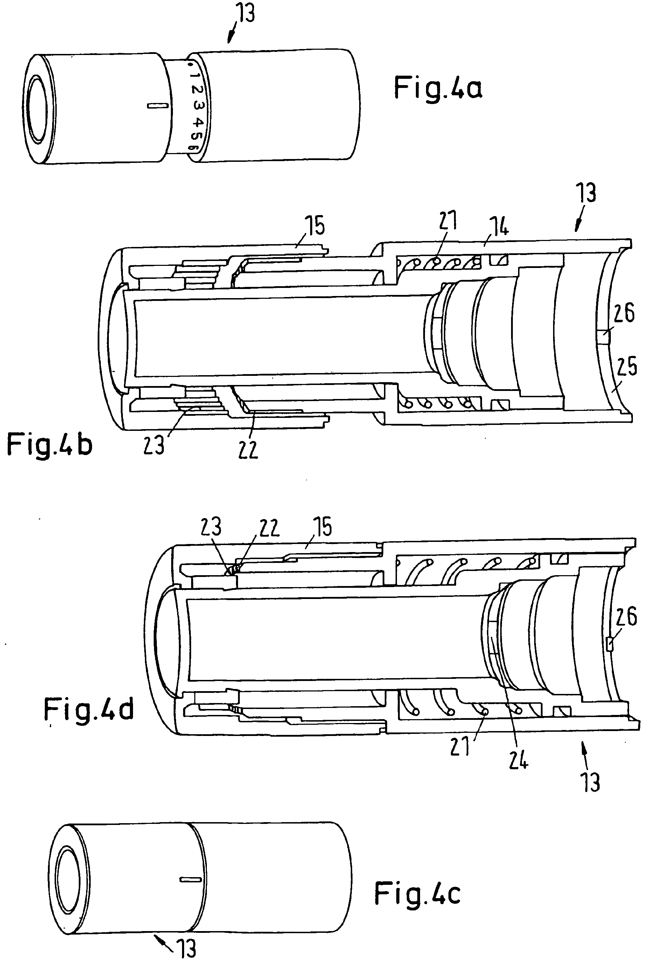

Fig. 4 shows the inner construction of the adjusting tool 13. Fig. 4a and fig. 4b show the adjusting tool 13 in the preadjustment condition, whereas fig. 4c and fig. 4d show the adjusting tool 13 in an adjustment condition.

A spring 21 is arranged between the two parts 14, 15. Said spring 21 is compressed when the two parts 14, 15 are moved away from each other, as shown in fig. 4b. The spring 21 is expanded when the two parts 14, 15 are allowed to move in a direction towards each other. Consequently the preadjustment condition shown in fig. 4a, 4b can be achieved only when external forces are applied in axial direction to the two parts 14, 15, e.g. by an installer.

The first part 14 has a first set of teeth 22 extending radially outwardly. The second part 15 has a second set of teeth 23 extending radially inwardly. In the preadjustment condition, the two sets of teeth 22, 23 are out of engagement, so that the first part 14 and the second part 15 can be rotated relative to each other. This situation is shown in fig. 4b.

In the situation shown in fig. 4d (the so called "adjustment condition") the two sets of teeth 22, 23 engage each other, so that the two parts 14, 15 are fixedly connected in rotational direction.

The fixation in rotational direction can also be achieved in other ways, e.g. a sort of cone, even if this connection does not lock exactly as described in connection with the teeth.

The second part 15 comprises an engaging geometry 24 adapted to engage the presetting element 7 at the protrusions 8, 9. Since the protrusions 8, 9 are arranged asymmetrically on the presetting element 7, the second part 15 can engage the presetting element 7 in a single angular position only. Since the protrusions 8, 9 can be designed in many different ways, the engaging geometry 24 should have a form matching the form of the protrusions 8, 9, so that there is a "unique" relation between the engaging geometry 24 and the protrusions 8, 9.

The first element 14 comprises a valve geometry 25 which is in the present case simply the inner wall of a hollow cylinder. This valve geometry 25 is adapted to be mounted on the mounting surface 12 of the housing 2 of the valve 1. When the first part 14 is mounted on this mounting surface 12 it can be rotated relative to the housing 2.

However, the valve geometry 25 of the first part 14 is provided with a stop 26 protruding radially inwardly. This stop 26 limits the rotational movement of the first part 14 with respect to the housing 2 since it comes to rest against the stop 11 against the housing 2 after a rotation about a certain extend.

Adjustment of the presetting of the valve 1 now is performed in the following way:
In a preadjustment step the adjusting tool 13 is adjusted as shown in fig. 3, i.e. the middle two parts 14, 15 are drawn away from each other, so that the scale 16 becomes visible and the two parts 14, 15 can be rotated relatively to each other so that the reference mark 17 can be positioned at the desired digit or point of the scale 16. Thereafter, the two parts 14, 15 are moved back in their adjustment condition in which they are connected unrotatably with each other.

In this adjustment condition the adjustment step is performed. The preadjusted adjusting tool 13 is mounted on the housing 2 of the valve 1, more precisely the valve geometry 25 of the adjusting tool 13 is pushed onto the mounting surface 12. However, such mounting can be performed only when the engaging geometry 24 fits onto the presetting element 7. Therefore it is possible that the installer has to rotate the adjusting tool 13 during this mounting.

When the engaging geometry 24 fits to the protrusions 8, 9 of the presetting element 7, the adjusting tool 13 can be pushed completely onto the mounting surface 12. Now, the adjusting tool 13 can be rotated until the stop 26 comes to rest against the stop 11. During such rotation, the second part 15 rotates the presetting element 7 as well since the first part 14 and the second part 15 are fixedly connected in rotational direction.

In some cases it may be necessary or advantageously to rotate the presetting element 7 in one of its end positions in circumferential direction in order to facilitate engaging of the presetting element 7 by the engaging geometry 24 of the second part 15.

## Claims

1. A method for adjusting a presetting of a valve, in particular a heat exchanger valve (1), said method comprising a step of moving in a valve housing (2) a presetting element (7) to a presetting position corresponding to a desired presetting, **characterized in that** in a preadjustment step said presetting position is adjusted in an adjusting tool (13) and in an adjustment step said adjusting tool (13) is mounted on said valve housing (2) engaging said presetting element (7) and said valve housing (2), wherein said adjusting tool (13) is moved relative to said valve housing (2) until it rests against a stop (11) at said valve housing (2).

2. The method according to claim 1, **characterized in that** said adjusting tool (13) comprises a first part (14) and a second part (15), wherein in said preadjustment step said first part (14) and said second part (15) are moved relative to each other in a moving direction and in said adjustment step are fixed relative to each other in said moving direction.

3. The method according to claim 1 or 2, **characterized in that** said adjusting tool (13) is rotated when engaging said presetting element (7) to adjust said presetting.

4. The method according to claim 3, **characterized in that** said first part (14) and said second part (15) are rotated relative to each other in said preadjustment step.

5. The method according to any of claims 2 to 4, **characterized in that** one of said first part (14) and said second part (15) comprises a scale (16) and the other of said first part (14) and said second part (15) comprises a reference mark (17), said preadjustment step comprising moving said reference mark (17) to a predetermined position of said scale (16).

6. An adjusting tool (13) for adjusting a presetting of a valve, in particular a heat exchanger valve (2), said adjusting tool (13) having an engaging geometry (24) adapted to engage a presetting element (7) of said heat exchanger valve, **characterized in that** said adjusting tool (13) comprises a first part (14) and a second part (15), in a preadjustment condition said first part (14) and said second part (15) being moveable relative to each other in a moving direction, in an adjustment condition said first part (14) and said second part (15) being fixed relative to each other in said moving direction, said first part (14) having a valve geometry (25) adapted to engage a stationary part of said valve (1) and said second part (15) having said engaging geometry (24).

7. The adjusting tool claim 6, **characterized in that** said first part (14) comprises stop means (26) adapted to come to rest against a stop (11) of said stationary part of said valve (1).

8. The adjusting tool according to claim 6 or 7, **characterized in that** said first part (14) and said second part (15) are rotatable around an axis relative to each other in said preadjustment condition.

9. The adjusting tool according to claim 8, **characterized in that** said first part (14) and said second part (15) are movable relative to each other in a direction parallel to said axis when changing between said preadjustment condition and said adjustment condition.

10. The adjusting tool according to claim 9, **characterized in that** first part (14) comprises a first set of teeth (22) and said second part (15) comprises a second set of teeth (23), said first set of teeth and said second set of teeth engaging each other in said adjustment condition and being out of engagement in said preadjustment condition.

11. The adjusting tool according to claim 10, **characterized in that** one of said first set of teeth (22) and said second set of teeth (23) extends radially outwardly and the other one of said first set of teeth (22) and said second set of teeth (23) extends radially inwardly.

12. The adjusting tool according to any of claims 9 to 11, **characterized in that** a spring (21) is arranged between said first part (14) and said second part (15) urging said first part (14) and said second part (15) into said adjustment condition.

13. The adjusting tool according to any of claims 6 to 12, **characterized in that** one of said first part (14) and said second part (15) comprises a scale (16) and the other one of said first part (14) and said second part (15) comprises a reference mark (17), wherein said reference mark (17) can be placed in different positions of said scale (16).

14. The adjusting tool according to claim 13, **characterized in that** in said adjustment condition said scale (16) is hidden by the one of said first (14) part and said second part (15) carrying said reference mark (17).

## Patentansprüche

1. Verfahren zum Verstellen einer Voreinstellung eines Ventils, insbesondere eines Wärmetauscherventils (1), wobei das Verfahren einen Schritt des Bewegens eines Voreinstellungselements (7) in einem Ventilgehäuse (2) in eine Voreinstellungsposition, die einer gewünschten Voreinstellung entspricht, umfasst, **dadurch gekennzeichnet, dass** in einem Vorverstellungsschritt die Voreinstellungsposition in einem Verstellwerkzeug (13) verstellt wird und in einem Verstellungsschritt das Verstellwerkzeug (13) an dem Ventilgehäuse (2) angebracht ist und das Voreinstellungselement (7) und das Ventilgehäuse (2) in Eingriff nimmt, wobei das Verstellwerkzeug (13) bezüglich des Ventilgehäuses (2) bewegt wird, bis es an einem Anschlag (11) an dem Ventilgehäuse (2) zur Anlage kommt.

2. Verfahren nach Anspruch 1, **dadurch gekennzeichnet, dass** das Verstellwerkzeug (13) einen ersten Teil (14) und einen zweiten Teil (15) umfasst, wobei in dem Vorverstellungsschritt der erste Teil (14) und der zweite Teil (15) in einer Bewegungsrichtung bezüglich einander bewegt werden und in dem Verstellungsschritt in der Bewegungsrichtung bezüglich einander fixiert werden.

3. Verfahren nach Anspruch 1 oder 2, **dadurch gekennzeichnet, dass** das Verstellwerkzeug (13) bei Ineingriffnahme des Voreinstellungselements (7) gedreht wird, um die Voreinstellung zu verstellen.

4. Verfahren nach Anspruch 3, **dadurch gekennzeichnet, dass** der erste Teil (14) und der zweite Teil (15) in dem Vorverstellungsschritt bezüglich einander gedreht werden.

5. Verfahren nach einem der Ansprüche 2 bis 4, **dadurch gekennzeichnet, dass** einer des ersten Teils (14) und des zweiten Teils (15) eine Skala (16) umfasst und der andere des ersten Teils (14) und des zweiten Teils (15) eine Bezugsmarke (17) umfasst, wobei der Vorverstellungsschritt Bewegen der Bezugsmarke (17) zu einer vorbestimmten Stelle der Skala (16) umfasst.

6. Verstellwerkzeug (13) zum Verstellen einer Voreinstellung eines Ventils, insbesondere eines Wärmetauscherventils (2), wobei das Verstellwerkzeug (13) eine Eingriffgeometrie (24) aufweist, die dazu ausgelegt ist, ein Voreinstellungselement (7) des Wärmetauscherventils in Eingriff zu nehmen, **dadurch gekennzeichnet, dass** das Verstellwerkzeug (13) einen ersten Teil (14) und einen zweiten Teil (15) umfasst, wobei der erste Teil (14) und der zweite Teil (15) in einem Vorverstellungszustand in einer Bewegungsrichtung bezüglich einander bewegbar sind, wobei der erste Teil (14) und der zweite Teil (15) in einem Verstellungszustand in der Bewegungsrichtung bezüglich einander fixiert sind, wobei der erste Teil (14) eine Ventilgeometrie (25) aufweist, die dazu ausgelegt ist, einen stationären Teil des Ventils (1) in Eingriff zu nehmen, und der zweite Teil (15) die Eingriffsgeometrie (24) aufweist.

7. Verstellwerkzeug nach Anspruch 6, **dadurch gekennzeichnet, dass** der erste Teil (14) ein Anschlagmittel (26) umfasst, das dazu ausgelegt ist, an einem Anschlag (11) des stationären Teils des Ventils (1) zur Anlage zu kommen.

8. Verstellwerkzeug nach Anspruch 6 oder 7, **dadurch gekennzeichnet, dass** der erste Teil (14) und der zweite Teil (15) in dem Vorverstellungszustand um eine Achse bezüglich einander drehbar sind.

9. Verstellwerkzeug nach Anspruch 8, **dadurch gekennzeichnet, dass** der erste Teil (14) und der zweite Teil (15) beim Wechsel zwischen dem Vorverstellungszustand und dem Verstellungszustand in einer parallel zu der Achse verlaufenden Richtung bezüglich einander beweglich sind.

10. Verstellwerkzeug nach Anspruch 9, **dadurch gekennzeichnet, dass** der erste Teil (14) einen ersten Satz von Zähnen (22) umfasst und der zweite Teil (15) einen zweiten Satz von Zähnen (23) umfasst, wobei der erste Satz von Zähnen und der zweite Satz von Zähnen im Verstellungszustand einander in Eingriff nehmen und im Vorverstellungszustand außer Eingriff voneinander sind.

11. Verstellwerkzeug nach Anspruch 10, **dadurch gekennzeichnet, dass** sich eines des ersten Satzes von Zähnen (22) und des zweiten Satzes von Zähnen (23) radial nach außen erstreckt und sich der andere des ersten Satzes von Zähnen (22) und des zweiten Satzes von Zähnen (23) radial nach innen erstreckt.

12. Verstellwerkzeug nach einem der Ansprüche 9 bis 11, **dadurch gekennzeichnet, dass** eine Feder (21) zwischen dem ersten Teil (14) und dem zweiten Teil (15) angeordnet ist, die den ersten Teil (14) und den zweiten Teil (15) in den Verstellungszustand drückt.

13. Verstellwerkzeug nach einem der Ansprüche 6 bis 12, **dadurch gekennzeichnet, dass** einer des ersten Teils (14) und des zweiten Teils (15) eine Skala (16) umfasst und der andere des ersten Teils (14) und des zweiten Teils (15) eine Bezugsmarke (17) umfasst, wobei die Bezugsmarke (17) an anderen Stellen der Skala (16) platziert werden kann.

14. Verstellwerkzeug nach Anspruch 13, **dadurch gekennzeichnet, dass** die Skala (16) im Verstellungszustand durch den einen des ersten Teils (14) und des zweiten Teils (15), der die Bezugsmarke (17) trägt, verdeckt wird.

## Revendications

1. Procédé pour ajuster un préréglage d'une soupape, en particulier une soupape (1) d'échangeur thermique, ledit procédé comprenant une étape consistant à faire entrer dans un boîtier (2) de soupape un élément (7) de préréglage jusqu'à une position de préréglage correspondant au préréglage souhaité, **caractérisé en ce que** dans une étape de pré-ajustement ladite position de préréglage est ajustée dans un outil (13) de réglage et dans une étape d'ajustement ledit outil (13) de réglage est monté sur ledit boîtier (2) de soupape en enclenchant ledit élément (7) de préréglage et ledit boîtier (2) de soupape, dans lequel on déplace ledit outil (13) de réglage par rapport audit boîtier (2) de soupape jusqu'à ce qu'il repose contre une butée (11) au niveau dudit boîtier (2) de soupape.

2. Procédé selon la revendication 1, **caractérisé en ce que** ledit outil (13) de réglage comprend une première partie (14) et une seconde partie (15), dans lequel dans ladite étape de pré-ajustement ladite première partie (14) et ladite seconde partie (15) se déplacent l'une par rapport à l'autre dans une direction de déplacement et dans ladite étape d'ajustement elles sont fixes l'une par rapport à l'autre dans ladite direction de déplacement.

3. Procédé selon la revendication 1 ou 2, **caractérisé en ce que** l'on fait tourner ledit outil (13) de réglage est tournée quand il s'enclenche avec ledit élément (7) de préréglage pour ajuster ledit préréglage.

4. Procédé selon la revendication 3, **caractérisé en ce que** l'on fait tourner ladite première partie (14) et ladite seconde partie (15) l'une par rapport à l'autre dans ladite étape de pré-ajustement.

5. Procédé selon l'une quelconque des revendications 2 à 4, **caractérisé en ce qu'**une desdites première partie (14) et seconde partie (15) comprend une échelle (16) et l'autre desdites première partie (14) et seconde partie (15) comprend un trait de repère (17), ladite étape de pré-ajustement comprenant l'opération consistant à déplacer ledit trait de repère (17) jusqu'à une position prédéterminée de ladite échelle (16).

6. Outil (13) de réglage pour ajuster un préréglage d'une soupape, en particulier une soupape (2) d'échangeur thermique, ledit outil (13) de réglage ayant une géométrie (24) d'entrée en prise apte à coopérer avec un élément (7) de préréglage dudit échangeur thermique, **caractérisé en ce que** ledit outil (13) de réglage comprend une première partie (14) et une seconde partie (15), dans une condition de pré-ajustement ladite première partie (14) et ladite seconde partie (15) peuvent se déplacer l'une par rapport à l'autre dans une direction de déplacement et dans une condition d'ajustement ladite première partie (14) et ladite seconde partie (15) sont fixes l'une par rapport à l'autre dans ladite direction de déplacement, ladite première partie (14) ayant une géométrie (25) de soupape apte à coopérer avec une partie fixe de ladite soupape (1) et ladite seconde partie (15) présentant ladite géométrie (24) d'entrée en prise.

7. Outil de réglage selon la revendication 6, **caractérisé en ce que** ladite première partie (14) comprend un moyen de butée (26) apte à venir reposer contre une butée (11) de ladite partie fixe de ladite soupape (1).

8. Outil de réglage selon la revendication 6 ou 7, **caractérisé en ce que** l'on peut faire tourner ladite première partie (14) et ladite seconde partie (15) l'une par rapport à l'autre autour d'un axe dans ladite condition de pré-ajustement.

9. Outil de réglage selon la revendication 8, **caractérisé en ce que** l'on peut déplacer ladite première partie (14) et ladite seconde partie (15) l'une par rapport à l'autre dans une direction parallèle audit axe quand on passe de ladite condition de pré-ajustement à ladite condition d'ajustement.

10. Outil de réglage selon la revendication 9, **caractérisé en ce que** ladite première partie (14) comprend une première série de dents (22) et ladite seconde partie (15) comprend une seconde série de dents (23), ladite première série de dents et ladite seconde série de dents s'engrenant les unes dans les autres dans ladite condition d'ajustement et étant désolidarisées dans ladite condition de pré-ajustement.

11. Outil de réglage selon la revendication 10, **caractérisé en ce que** l'une desdites première (22) et seconde (23) séries de dents s'étend radialement vers l'extérieur et l'autre desdites première (22) et seconde (23) séries de dents s'étend radialement vers l'intérieur.

12. Outil de réglage selon l'une quelconque des revendications 9 à 11, **caractérisé en ce qu'**un ressort (21) est disposé entre ladite première partie (14) et ladite seconde partie (15) et amène ladite première partie (14) et ladite seconde partie (15) dans ladite condition d'ajustement.

13. Outil de réglage selon l'une quelconque des revendications 6 à 12, **caractérisé en ce qu'**une desdites première partie (14) et seconde partie (15) comprend une échelle (16) et l'autre desdites première partie (14) et seconde partie (15) comprend un trait de repère (17), dans lequel ledit trait de repère (17) peut être placé en différentes positions sur ladite échelle (16).

14. Outil de réglage selon la revendication 13, **caractérisé en ce que** dans ladite condition d'ajustement ladite échelle (16) est masquée par celle des première (14) et seconde (15) parties qui porte ledit trait de repère (17).
